# EUROPEAN PATENT SPECIFICATION

(11) **EP 1 985 350 B1**
(45) Date of publication and mention of the grant of the patent: **06.07.2011**
(21) Application number: 08154502.2
(22) Date of filing: 15.04.2008
(51) Int. Cl.: B01D 39/16

(54) **Anti-allergen filter**
Antiallergenfilter
Filtre anti-allergène

(30) Priority: 26.04.2007 JP 2007117100
(43) Date of publication of application: 29.10.2008
(73) Proprietor: Sanden Corporation, Isesaki-shi, Gunma 372-8502 (JP)
(72) Inventor: Imafuji, Tomohisa, Isesaki-shi Gunma 372-8502 (JP)
(74) Representative: Haley, Stephen

(56) References cited:
- EP-A- 1 946 815
- JP-A- 2000 204 277
- JP-A- 2005 095 633
- JP-A- 2006 335 934
- US-A- 6 156 817

## Description

The present invention relates to an anti-allergen filter, and specifically, to an anti-allergen filter suitable for cleaning air in a vehicle interior and the like.

For example, accompanied with increase of interest and variation of needs with respect to quality of air in a vehicle interior, as a filter for cleaning air in a vehicle interior used in an air conditioning system and the like, various filters have been on the market, to which are given with not only conventional functions for dust collection and deodorization but also functions for trapping and inactivating allergen substances such as pollen and mite. Although most of such conventional filters are formed so that an anti-allergen agent for inactivating allergen substances is impregnated into or loaded onto a filter substrate (for example, JP-A-2005-218967), there are some proposals of anti-allergen filter containing substances originating from plant components as an anti-allergen agent (for example, JP-A-2003-55122 and JP-A-2005-290331). However, there are few filters which are suitable for air conditioning systems for vehicles which require with a small space, a large amount of air to be cleaned and a low pressure loss and which can ensure a good performance for trapping allergen substances and a high anti-allergen inactivating rate.

Namely, in the conventional technologies, because the function for trapping allergen substances and the function for inactivating the trapped allergen substances are still poor, there is still a problem that the allergen substances trapped by the filter are released again at a condition where the allergen substances are not inactivated.

Accordingly, it would be desirable to provide an anti-allergen filter which can achieve both of an excellent performance for trapping allergen substances and a high inactivating rate due to an anti-allergen agent for the trapped allergen substances, thereby exhibiting an excellent anti-allergen performance.

The document EP-A-1946815, published 23.07.2008 with priority from 11.12.2006 dexscribes an anti-allergenic filter containing an anti-allergenic substance, such as a tannic derivative, olive leaf or ginkgo leaf extracts To satisfy such a desire, according to the present invention there is provided an anti-allergen filter comprising a filter substrate which contains anti-allergen agent, characterized in that said filter substrate contains anti-allergen agents comprising at least one selected from a group A and at least one selected from a group B, respectively, said group A being a tannic group such as a tannic acid and a gallotannine, said group B being a plant extract group except said group A, and the total content of said anti-allergen agents is in a range of 0.1 to 10 wt% relative to a weight of said filter substrate,
wherein said anti-allergen agent of said group B is selected from an olive leaf extract and a ginkgo leaf extract.

In such an anti-allergen filter, because at least one kind of anti-allergen agent selected from the group A and at least one kind of anti-allergen agent selected from the group B are contained in the filter substrate, an optimum anti-allergen filter can be prepared in accordance with target allergen substances to be inactivated by selecting the anti-allergen agents in accordance with the allergen substances to be inactivated or/and by changing the compounding rate of the respective anti-allergen agents. Moreover, since the total content of the contained anti-allergen agents is controlled within the range of 0.1 to 10 wt% relative to the weight of the filter substrate, while the anti-allergen performance of the anti-allergen filter is maintained, cost up of the filter may be suppressed. Namely, if the total content of the anti-allergen agents is less than 0.1 wt%, the amount of the anti-allergen agents is too small, and a proper anti-allergen performance may not be exhibited. On the other hand, even if the total content of the anti-allergen agents is set at a content more than 10 wt%, a greater improvement of the anti-allergen performance cannot be expected, and only the cost may be increased proportionally.

Where, in the present invention, the olive leaf means the leaf part of "Olea europaea" (scientific name) in osmanthus family, and the ginkgo leaf means the leaf part of "Ginkgo biloba L." (scientific name) in ginkgo family.

Further, it is preferred that a tea leaf extract containing a main constituent such as an epicatechin gallate, an epicatechin, an epigallocatechin and an epigallocatechin gallate is further contained as the anti-allergen agent of the group B in the filter substrate, in addition to the above-described olive leaf extract or ginkgo leaf extract. Because the catechin group such as an epicatechin gallate, an epicatechin, an epigallocatechin and an epigallocatechin gallate can exhibit an antibacterial action, an inconvenience such as pollution of the anti-allergen filter itself by bacteria may be surely prevented, and the life of the anti-allergen filter may be extended.

As the above-described filter substrate, a polypropylene or polyethylene terephthalate non-woven fabric having a surface density in a range of 10 to 200 g/m² can be used. If the surface density is too low, it may become hard to hold the form of the filter substrate required for containing the anti-allergen agent (for example, for loading the anti-allergen agent). If the surface density is too high, the air-flow resistance may become too high, and the function as a filter may be damaged.

Although the anti-allergen filter according to the present invention can be used at a merely plane form, in order to make it exhibit an excellent performance efficiently in a limited small space such as a space for a vehicle, it is preferred to use the filter at a condition where the filter substrate is pleated. In this case, it is preferred that the filter substrate is pleated at a ratio (p/h) of a folding pitch (p) [mm] to a folding width (h) [mm] in a range of 0.1 to 0.5. If the ratio (p/h) is less than 0.1, although the performance for trapping allergen substances is increased, there is a fear to be easily clogged. On the other hand, if the ratio (p/h) is more than 0.5, the performance for trapping allergen substances contained in air may decrease. However, the form of the filter substrate is not particularly limited to the above-described form, a wave form, a cylindrical form and other forms may be employed.

Further, the anti-allergen filter according to the present invention is suitable, especially as a filter used for cleaning air in a vehicle interior. For example, it may be disposed at an arbitrary place in an air path of an air conditioning system for vehicles, which communicates with a vehicle interior.

The anti-allergen filter according to the present invention can achieve a particle trapping rate of 90% or more with respect to particles having a diameter of 5 µm or more when determined based on an examination method according to an examination standard defined in ISO/TS 11155-1.

Further, the anti-allergen filter according to the present invention can achieve a particle holding amount of 300 g/m² or more per a projection area of the filter until an air-flow resistance of the filter is increased by 100 Pa from an initial resistance, with respect to a particle diameter of a standard dust, when determined based on an examination method according to an examination standard defined in ISO/TS 11155-1.

Thus, in the anti-allergen filter according to the present invention, since at least one anti-allergen agent selected from the group A and at least one anti-allergen agent selected from the group B are contained in the filter substrate, an optimum anti-allergen filter can be realized in accordance with target allergen substances to be inactivated, by selecting proper anti-allergen agents in accordance with the allergen substances to be inactivated or/and by changing the compounding rate of the respective anti-allergen agents. Further, since the total content of the contained anti-allergen agents is controlled within the range of 0.1 to 10 wt% relative to the weight of the filter substrate, while the anti-allergen performance of the anti-allergen filter can be maintained, cost up of the filter can be suppressed.

Furthermore, in a case where the tea leaf extract containing its main constituent such as an epicatechin gallate, an epicatechin, an epigallocatechin and an epigallocatechin gallate is contained as the anti-allergen agent, by the antibacterial action due to the catechin group, an inconvenience such as pollution of the anti-allergen filter itself by bacteria may be surely prevented, and the life of the anti-allergen filter may be extended.

Further objects, features, and advantages of the present invention will be understood from the following detailed description of preferred embodiments of the present invention with reference to the accompanying figures.

Embodiments of the invention now are described with reference to the accompanying figures, which are given by way of example only, and are not intended to limit the present invention.
Fig. 1 is a schematic perspective view of an anti-allergen filter according to an embodiment of the present invention.
Fig. 2 is a perspective view of a filter substrate of the anti-allergen filter depicted in Fig. 1 before being pleated.
Fig. 3 is an enlarged, partial sectional view of the filter substrate depicted in Fig. 2.
Fig. 4 is a schematic perspective view of a test device for determining performances in the present invention.
Fig. 5 is a graph showing the result of an examination with respect to inactivation of anti-allergen substances.
Fig. 6 is a graph showing the result of an examination with respect to dust collection.

### (Brief explanation of symbols in the figures)

- 1:: anti-allergen filter
- 2:: soiled air
- 3:: cleaned air
- 4:: filter substrate
- 21:: dust sampler
- 22:: specimen holding material
- 23:: specimen to be determined
- 23:: suction fan

Hereinafter, desirable embodiments of the present invention will be explained referring to the drawings.

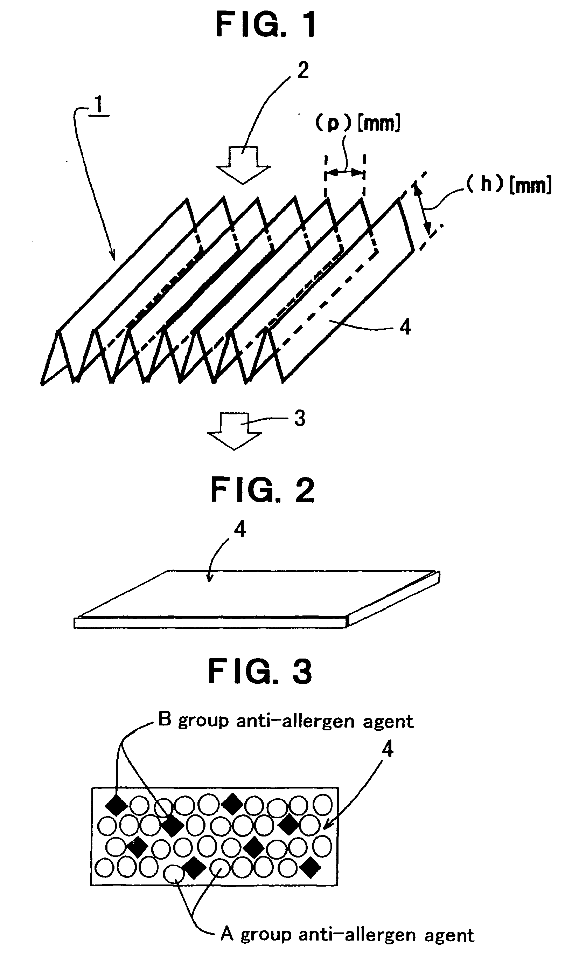

Fig. 1 depicts an anti-allergen filter according to an embodiment of the present invention. In this embodiment, anti-allergen filter 1 (its filter substrate) is pleated from a plane condition shown in Fig. 2. Relative to this anti-allergen filter 1, soiled air 2 is supplied from upstream side, and air having passed through the filter 1 is sent as cleaned air 3 from downstream side to an vehicle interior, etc. In this embodiment, anti-allergen filter 1 comprises a filter substrate 4 containing anti-allergen agent.

The anti-allergen agent is contained, for example, by loading the anti-allergen agent onto filter substrate 4, holding the anti-allergen agent in the filter substrate 4, or kneading the anti-allergen agent into the filter substrate 4. As the kind of the anti-allergen agent to be contained, at least one kind of anti-allergen agent selected from the group A, which is a tannic group such as a tannic acid and a gallotannine, and at least one kind of anti-allergen agent selected from the group B, which is a plant extract group except the group A, are contained, for example as shown in Fig. 3. As the anti-allergen agent of the group B, in addition to olive leaf extract or ginkgo leaf extract, catechin group comprising a tea leaf extract such as an epicatechin gallate, an epicatechin, an epigallocatechin and an epigallocatechin gallate, which exhibits an antibacterial action, may be contained. The total content of these anti-allergen agents is controlled within a range of 0.1 to 10 wt% relative to the weight of filter substrate 4.

Further, as filter substrate 4, a polypropylene or polyethylene terephthalate non-woven fabric having a surface density in a range of 10 to 200 g/m² can be used. Further, filter substrate 4 is pleated at a ratio (p/h) of a folding pitch (p) [mm] to a folding width (h) [mm] in a range of 0.1 to 0.5.

### Examples

The following examinations were carried out in order to determine the performance of anti-allergen filter 1 formed as described above and to confirm the proprieties of the total content of anti-allergen agents of groups A and B relative to the weight of filter substrate 4, the surface density of filter substrate 4, and the ratio (p/h) of the folding pitch (p) [mm] to the folding width (h) [mm] of the pleated substrate 4, which were defined as the desirable ranges in the present invention. Hereinafter, examples are shown.

### Examples 1-4, Comparative Examples 1-3:

As shown in Table 1, the ratio (p/h) was set at 0.6, the content (wt%) of anti-allergen agents relative to the weight of the filter substrate and the compounding rate of groups A and B of the anti-allergen agents were changed, and the allergen inactivating rates and the dust performances were determined.

### Examples 5-8, Comparative Examples 4-6:

As shown in Table 1, the ratio (p/h) was set at 0.4, the content (wt%) of anti-allergen agents relative to the weight of the filter substrate and the compounding rate of groups A and B of the anti-allergen agents were changed, and the allergen inactivating rates and the dust performances were determined.

### Examples 9-12, Comparative Examples 7-9:

As shown in Table 1, the ratio (p/h) was set at 0.2, the content (wt%) of anti-allergen agents relative to the weight of the filter substrate and the compounding rate of groups A and B of the anti-allergen agents were changed, and the allergen inactivating rates and the dust performances were determined.

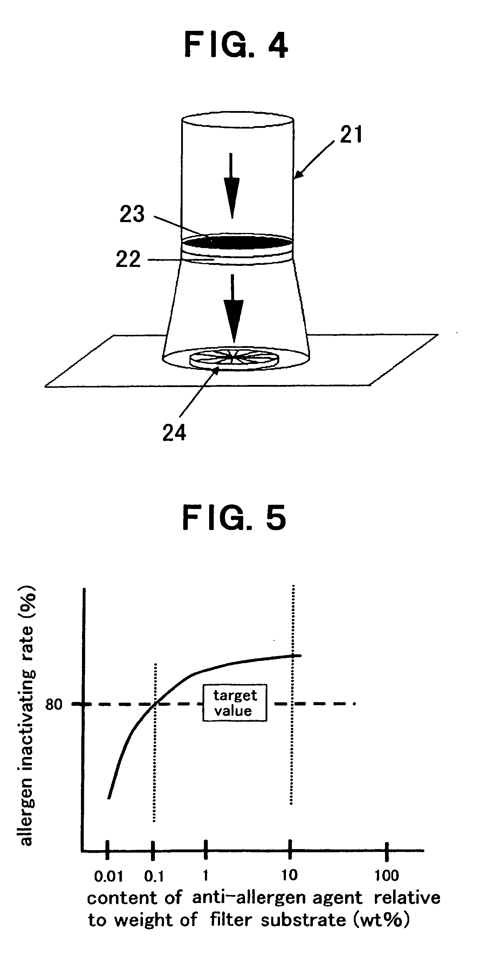

As the method for the determination, as shown in Fig. 4, a specimen holding material 22 with a diameter of 6 cm was fitted into a dust sampler 21, thereon the above-described filter, which was prepared as a specimen to be determined 23 by being cut at a circular form having a diameter of 6 cm, was fitted, and they were set on a suction test device having a suction fan 24. At that condition, fan 24 of the device was adjusted to get an air velocity of 0.1 m/sec. About 10 mg of dust containing mite allergen for the determination of mite allergen, and about 3 mg of cedar pollen for the determination of cedar pollen allergen, were served to the determination surface, respectively. The specimen to be determined 23 was put in a polyethylene bag with a fastener, the mite and cedar pollen allergen was extracted by using 10 mL of phosphate buffer saline containing 10% of skimmed milk to prepare a solution to be determined. With the prepared solution to be determined, by using a method of enzyme-linked immunosorbent assey (ELISA method), the amount of mite and cedar pollen allergen was measured to determine the allergen reduction rate (allergen inactivating rate). In the determination, a value of 80% or more was set as a target value of allergen inactivating rate. In the determination of the above-described examination, a result that could achieve this target value was determined as a rank "O", and a result that could not achieve this target value was determined as a rank "×".

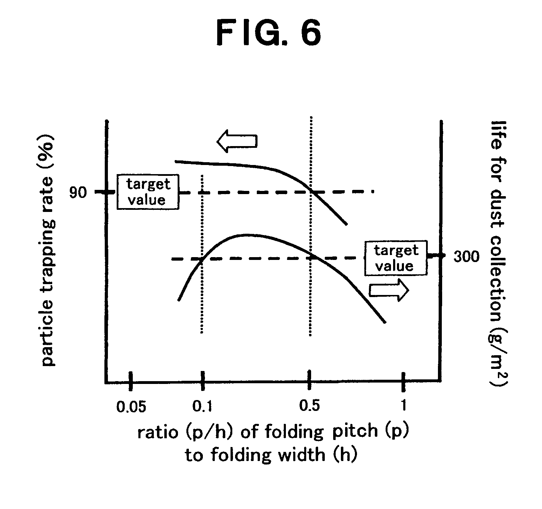

Although the target value of the particle trapping rate for dust collection performance was set at 90% or more, as long as the particle trapping rate is 80% or more, it is sufficiently served to the practical use. Therefore, in the determination of the examination results, a result of 90% or more in particle trapping rate was determined as a rank "O", a result of 80% or more in particle trapping rate was determined as a rank "Δ", and a result less than 80% in particle trapping rate was determined as a rank "×". Further, the target value as the life for dust collection was set at 300 g/m², and in the determination of the examination results, a result that could achieve this target value was determined as a rank "O", and a result that could not achieve this target value was determined as a rank "×". A result including a determination rank "×" was determined as an anti-allergen filter which could not be served to the practical use. The results of the examination are shown in Table 1 and Figs. 5 and 6.

**Table 1**

| | Total content of anti-allergen agents relative to weight of filter substrate and Compounding rate (group A : group B) | p/h | Allergen inactivating performance | | Performance of dust collection | | | |
|---|---|---|---|---|---|---|---|---|
| | | | Allergen substance inactivating rate [%] | Determination | Particle trapping rate [%] | Determination | Life for dust collection [g/m²] | Determination |
| Comparative Example 1 | 0.1 [0 : 100] | 0.6 | 68 | × | 82 | Δ | 420 | ○ |
| Comparative Example 2 | 0.02 [70 : 30] | 0.6 | 40 | × | 78 | × | 465 | ○ |
| Example 1 | 0.1 [70 : 30] | 0.6 | 80 | ○ | 82 | Δ | 420 | ○ |
| Example 2 | 1.5 [80 : 20] | 0.6 | 92 | ○ | 86 | Δ | 375 | ○ |
| Example 3 | 3.0 [90 : 10] | 0.6 | 98 | ○ | 87 | Δ | 360 | ○ |
| Example 4 | 8.0 [95 : 5] | 0.6 | 99 | ○ | 88 | Δ | 330 | ○ |
| Comparative Example 3 | 15 [95 : 5] | 0.6 | 99 or more | ○ | 91 | ○ | 180 | × |
| Comparative Example 4 | 0.1 [0 : 100] | 0.4 | 68 | × | 92 | ○ | 450 | ○ |
| Comparative Example 5 | 0.02 [70 : 30] | 0.4 | 40 | × | 91 | ○ | 495 | ○ |
| Example 5 | 0.1 [70 : 30] | 0.4 | 80 | ○ | 92 | ○ | 450 | ○ |
| Example 6 | 1.5 [80 : 20] | 0.4 | 92 | ○ | 93 | ○ | 390 | ○ |
| Example 7 | 3.0 [90 : 10] | 0.4 | 98 | ○ | 94 | ○ | 375 | ○ |
| Example 8 | 8.0 [95 : 5] | 0.4 | 99 | ○ | 95 | ○ | 345 | ○ |
| Comparative Example 6 | 15 [95 : 5] | 0.4 | 99 or more | ○ | 96 | ○ | 210 | × |
| Comparative Example 7 | 0.1 [0 : 100] | 0.2 | 68 | × | 93 | ○ | 495 | ○ |
| Comparative Example 8 | 0.02 [70 : 30] | 0.2 | 40 | × | 92 | ○ | 540 | ○ |
| Example 9 | 0.1 [70 : 30] | 0.2 | 80 | ○ | 93 | ○ | 495 | ○ |
| Example 10 | 1.5 [80 : 20] | 0.2 | 92 | ○ | 94 | ○ | 405 | ○ |
| Example 11 | 3.0 [90 : 10] | 0.2 | 98 | ○ | 95 | ○ | 390 | ○ |
| Example 12 | 8.0 [95 : 5] | 0.2 | 99 | ○ | 96 | ○ | 360 | ○ |
| Comparative Example 9 | 15 [95 : 5] | 0.2 | 99 or more | ○ | 97 | ○ | 240 | × |

As is evident from Table 1 and Figs. 5 and 6, in the present invention, a high allergen inactivating rate of 80% or more can be achieved, and a high-performance anti-allergen filter with a particle trapping rate of 80% or more and a life for dust collection of 300 g/m² can be realized. Further, preferably, by setting the ratio (p/h) at 0.2 or 0.4, a higher performance with a particle trapping rate of 90% or more can be realized.

The anti-allergen filter according to the present invention can be applied to any field, and in particular, it is suitable to use for cleaning air in a vehicle interior, which is limited in space and installation.

## Claims

1. An anti-allergen filter comprising a filter substrate which contains anti-allergen agent, **characterized in that** said filter substrate contains anti-allergen agents comprising at least one selected from a group A and at least one selected from a group B, respectively, said group A being a tannic group such as a tannic acid and a gallotannine, said group B being a plant extract group except said group A, and the total content of said anti-allergen agents is in a range of 0.1 to 10 wt% relative to a weight of said filter substrate,
wherein said anti-allergen agent of said group B is selected from an olive leaf extract and a ginkgo leaf extract.

2. The anti-allergen filter according to claim 1, wherein a tea leaf extract containing a main constituent such as an epicatechin gallate, an epicatechin, an epigallocatechin and an epigallocatechin gallate is further contained as said anti-allergen agent of said group B.

3. The anti-allergen filter according to any preceding claim, wherein said filter substrate comprises a polypropylene or polyethylene terephthalate non-woven fabric having a surface density in a range of 10 to 200 g/m².

4. The anti-allergen filter according to any preceding claim, wherein said filter substrate is pleated at a ratio (p/h) of a folding pitch (p) [mm] to a folding width (h) [mm] in a range of 0.1 to 0.5.

5. The anti-allergen filter according to any preceding claim, wherein said anti-allergen filter is used for an air conditioning system for vehicles.

6. The anti-allergen filter according to any preceding claim, wherein said anti-allergen filter can achieve a particle trapping rate of 90% or more with respect to particles having a diameter of 5 µm or more when determined based on an examination method according to an examination standard defined in ISO/TS 11155-1.

7. The anti-allergen filter according to any of claims 1 to 6, wherein said anti-allergen filter can achieve a particle holding amount of 300 g/m² or more per a projection area of said filter until an air-flow resistance of said filter is increased by 100 Pa from an initial resistance, with respect to a particle diameter of a standard dust, when determined based on an examination method according to an examination standard defined in ISO/TS 11155-1.

## Patentansprüche

1. Antiallergenfilter, umfassend ein Filtersubstrat, das ein Antiallergikum beinhaltet, **gekennzeichnet dadurch, dass** dieses Filtersubstrat Antiallergika beinhaltet, die mindestens einen Bestandteil aus der Gruppe A und mindestens einen Bestandteil aus der Gruppe B beinhalten, wobei Gruppe A eine tanninhaltige Gruppe, wie z. B. ein Tannin und ein Gallotannin ist, Gruppe B eine Pflanzenextraktgruppe ohne Gruppe A ist und der Gesamtinhalt dieser Antiallergika in einem Bereich von 0,1 bis 10 Gewichtsprozent im Verhältnis zu einem Gewicht des Filtersubstrats liegt,
wobei das Antiallergikum der Gruppe B entweder ein Olivenblattextrakt oder ein Ginkgoblattextrakt ist.

2. Antiallergenfilter gemäß Anspruch 1, wobei ferner ein Teeblattextrakt, der einen Hauptbestandteil, wie zum Beispiel ein Epicatechingallat, ein Epicatechin, ein Epigallocatechin oder ein Epigallocatechingallat, enthält, im Antiallergikum der Gruppe B enthalten ist.

3. Antiallergenfilter gemäß einem der vorhergehenden Ansprüche, wobei das Filtersubstrat ein Polypropylen- oder Polyethylenterephthalat-Nonwoven mit einer Oberflächendichte von 10 bis 200 g/m² umfasst.

4. Antiallergenfilter gemäß einem der vorhergehenden Ansprüche, wobei das Filtersubstrat mit einem Verhältnis (p/h) eines Faltenabstands (p) [mm] zu einer Faltenbreite (h) [mm] von 0,1 bis 0,5 gefaltet ist.

5. Antiallergenfilter gemäß einem der vorhergehenden Ansprüche, wobei der Antiallergenfilter für eine Klimaanlage für Fahrzeuge verwendet wird.

6. Antiallergenfilter gemäß einem der vorhergehenden Ansprüche, wobei der Antiallergenfilter bei der Bestimmung gemäß einer Untersuchungsmethode gemäß einem in ISO/TS 11155-1 definierten Untersuchungsstandard eine Partikeleinfangrate von mindestens 90 % in Bezug auf Partikel mit einem Durchmesser von mindestens 5 µm erreichen kann.

7. Antiallergenfilter gemäß einem der Ansprüche 1 bis 6, wobei der Antiallergenfilter bei der Bestimmung gemäß einer Untersuchungsmethode gemäß einem in ISO/TS 11155-1 definierten Untersuchungsstandard ein Partikelfassungsvermögen von mindestens 300 g/m² pro Projektionsbereich des Filters erreichen kann, bis sich ein Strömungswiderstand des Filters im Vergleich zu einem Ausgangswiderstand bezogen auf einen Partikeldurchmesser eines Standardstaubs um 100 Pa vergrößert hat.

## Revendications

1. Filtre anti-allergènes comprenant un substrat filtrant qui contient l'agent anti-allergènes, **caractérisé en ce que** ledit substrat filtrant contient des agents anti-allergènes comprenant au moins un sélectionné parmi un groupe A et au moins un sélectionné parmi un groupe B, respectivement, ledit groupe A étant un groupe tannique tel qu'un acide tannique et un tanin gallique, ledit groupe B étant un groupe d'extraits végétaux, à l'exception dudit groupe A, et la teneur totale en lesdits agents anti-allergènes est comprise entre 0,1 et 10 % en poids relativement au poids dudit substrat filtrant,
dans lequel ledit agent anti-allergènes dudit groupe B est sélectionné entre un extrait de feuille d'olivier et un extrait de feuille de ginkgo.

2. Filtre anti-allergènes selon la revendication 1, dans lequel un extrait de feuille de théier contenant un constituant principal tel qu'un gallate d'épicatéchine, une épicatéchine, une épigallocatéchine et un gallate d'épigallocatéchine est inclus, en outre, à titre d'agent anti-allergènes dudit groupe B.

3. Filtre anti-allergènes selon l'une quelconque des revendications précédentes, dans lequel ledit substrat filtrant comprend un tissu non tissé à base de polypropylène ou de polyéthylène téréphtalate ayant une densité surfacique comprise entre 10 et 200 g/m².

4. Filtre anti-allergènes selon l'une quelconque des revendications précédentes, dans lequel ledit substrat filtrant est plissé en un rapport (p/h) écartement des plis (p) [mm] / largeur des plis (h) [mm] compris entre 0,1 et 0,5.

5. Filtre anti-allergènes selon l'une quelconque des revendications précédentes, dans laquelle ledit filtre anti-allergènes est utilisé pour une installation de conditionnement de l'air pour véhicules.

6. Filtre anti-allergènes selon l'une quelconque des revendications précédentes, dans laquelle ledit filtre anti-allergènes peut atteindre un taux de retenue des particules de 90 % ou plus, pour ce qui est des particules ayant un diamètre de 5 µm ou plus, lorsque déterminé selon une méthode d'examen conforme à une norme d'examen définie dans ISO/TS 11155-1.

7. Filtre anti-allergènes selon l'une quelconque des revendications 1 à 6, dans laquelle ledit filtre anti-allergènes peut arrêter une quantité de particules retenues de 300 g/m² ou plus par zone de projection dudit filtre jusqu'à ce qu'une résistance au débit d'air dudit filtre soit augmentée de 100 Pa par rapport à une résistance initiale, en ce qui concerne le diamètre d'une particule de poussière standard, lorsque déterminé selon une méthode d'examen conforme à une norme d'examen définie dans ISO/TS 11155-1.
